# FASCICULE DE BREVET EUROPEEN

(11) **EP 3 584 918 B1**
(45) Date de publication et mention de la délivrance du brevet: **06.04.2022**
(21) Numéro de dépôt: 19181039.9
(22) Date de dépôt: 18.06.2019
(51) Int. Cl.: H02M 3/158, H02M 1/32, H02M 1/36

(54) **CONVERTISSEUR À DÉCOUPAGE**
SCHALTWANDLER
SWITCHING CONVERTER

(30) Priorité: 19.06.2018 FR 1855400
(43) Date de publication de la demande: 25.12.2019
(73) Titulaire: STMICROELECTRONICS SA, 92120 Montrouge (FR)
(72) Inventeur: AGUT, Francois, 73460 SAINT VITAL (FR); TROCHUT, Severin, 73200 GILLY SUR ISERE (FR)
(74) Mandataire: Cabinet Beaumont

(56) Documents cités:
- US-A1- 2008 203 984
- US-A1- 2009 122 585
- US-A1- 2013 223 120

## Description

### Domaine technique

La présente description concerne de façon générale les circuits électroniques, et plus particulièrement les convertisseurs d'énergie à découpage.

### Technique antérieure

Dans un convertisseur à découpage, une tension d'alimentation, fournie à une entrée du convertisseur, est découpée (ou hachée) en commutant un ou plusieurs interrupteurs de manière à mettre en oeuvre des phases d'accumulation d'énergie dans un élément inductif et des phases de restitution, à une charge connectée en sortie du convertisseur, de l'énergie accumulée dans cet élément inductif. Les documents US 2008/0203984, US 2009/0122585 et US 2013/0223120 décrivent des exemples de convertisseurs à découpage.

### Résumé de l'invention

Un mode de réalisation prévoit un convertisseur à découpage qui pallie tout ou partie des inconvénients des convertisseurs à découpage usuels.

Un mode de réalisation pallie plus particulièrement les inconvénients liés à la connexion d'une source de tension d'alimentation.

Un mode de réalisation prévoit un dispositif comprenant : un élément inductif couplant un premier noeud à un deuxième noeud ; au moins un premier transistor MOS couplant le deuxième noeud à un troisième noeud ; et un premier circuit de commande du premier transistor comportant un premier interrupteur couplant le troisième noeud à la grille du premier transistor, le dispositif formant un convertisseur à découpage.

Selon un mode de réalisation, un deuxième interrupteur couple le deuxième noeud à un quatrième noeud d'application d'un potentiel de référence.

Selon un mode de réalisation, le premier interrupteur est un deuxième transistor à canal du même type que celui du premier transistor.

Selon un mode de réalisation, le premier transistor est à canal N.

Selon un mode de réalisation, le premier circuit comprend un deuxième circuit de commande du premier interrupteur.

Selon un mode de réalisation, le premier circuit de commande comprend en outre : un élément capacitif connecté entre le deuxième noeud et un cinquième noeud ; et une association série d'une première diode et d'un troisième interrupteur connectée entre le cinquième noeud et la grille du premier transistor.

Selon un mode de réalisation, la borne de commande du troisième interrupteur est connectée à la borne de commande du premier interrupteur.

Selon un mode de réalisation, le troisième interrupteur est un troisième transistor à canal du type opposé à celui du canal du premier transistor.

Selon un mode de réalisation, entre les deuxième et troisième noeuds, le premier transistor est en série avec une deuxième diode.

Selon un mode de réalisation, la deuxième diode et la diode intrinsèque du premier transistor sont connectées en sens contraire l'une de l'autre.

Un autre mode de réalisation prévoit un circuit électronique comprenant un dispositif tel que défini ci-dessus.

Un autre mode de réalisation prévoit un procédé de démarrage d'un dispositif tel que défini ci-dessus.

Selon un mode de réalisation, le procédé comprend les étapes suivantes : connecter une source de tension continue au premier noeud ; et mettre le premier transistor à l'état bloqué en fermant le premier interrupteur.

Selon un mode de réalisation, le premier interrupteur est maintenu fermé par le premier circuit de commande jusqu'à ce que le troisième noeud soit à un potentiel sensiblement égal au potentiel appliqué au premier noeud.

Selon un mode de réalisation, le deuxième circuit fournit, à la borne de commande du premier interrupteur, le potentiel le plus élevé entre les potentiels du troisième noeud et du premier noeud ou le potentiel le plus élevé entre les potentiels du troisième noeud et du deuxième noeud.

Selon un mode de réalisation, le deuxième interrupteur est commandé en modulation de largeur d'impulsion une fois que les potentiels des premier et troisième noeuds sont sensiblement égaux.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente schématiquement un mode de réalisation d'un convertisseur à découpage DC/DC ;
la figure 2 représente de manière plus détaillée un mode de réalisation d'une partie du convertisseur de la figure 1 ; et
la figure 3 représente des chronogrammes illustrant un exemple de fonctionnement du convertisseur de la figure 1.

### Description des modes de réalisation

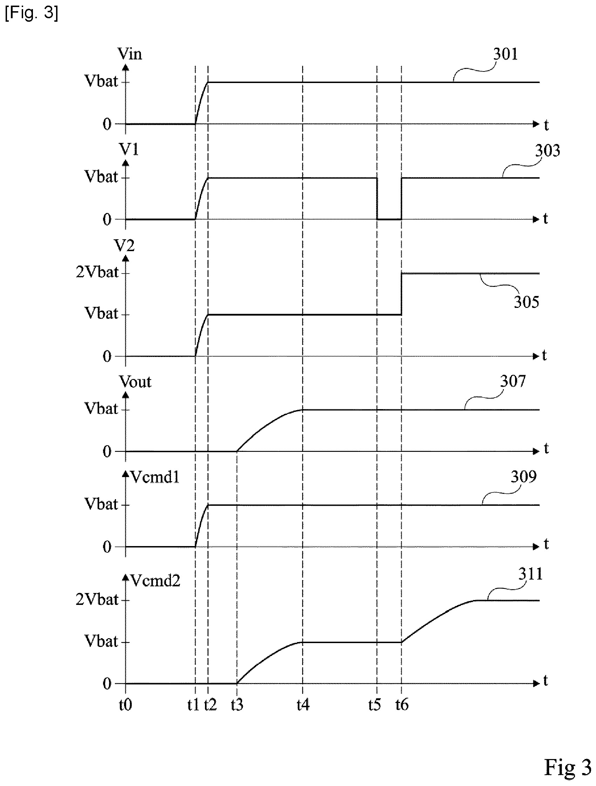

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. De plus, les diverses figures, en particulier les chronogrammes de la figure 3, ne sont pas tracées à l'échelle.

Par souci de clarté, seuls les étapes et éléments utiles à la compréhension des modes de réalisation décrits ont été représentés et sont détaillés. En particulier, les circuits de commande des interrupteurs de découpage et la commande de ces interrupteurs, par exemple en modulation de largeur d'impulsion (PWM - Pulse Width Modulation), n'ont pas été décrits, les modes de réalisation décrits étant compatibles avec les solutions usuelles.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Sauf précision contraire, les expressions "environ", "approximativement", "sensiblement", et "de l'ordre de" signifient à 10 % près, de préférence à 5 % près.

En outre, lorsque que l'on considère qu'aucun courant ne circule entre deux noeuds, sauf précision contraire, on ne tient pas compte d'éventuels courants de fuite pouvant circuler entre ces deux noeuds.

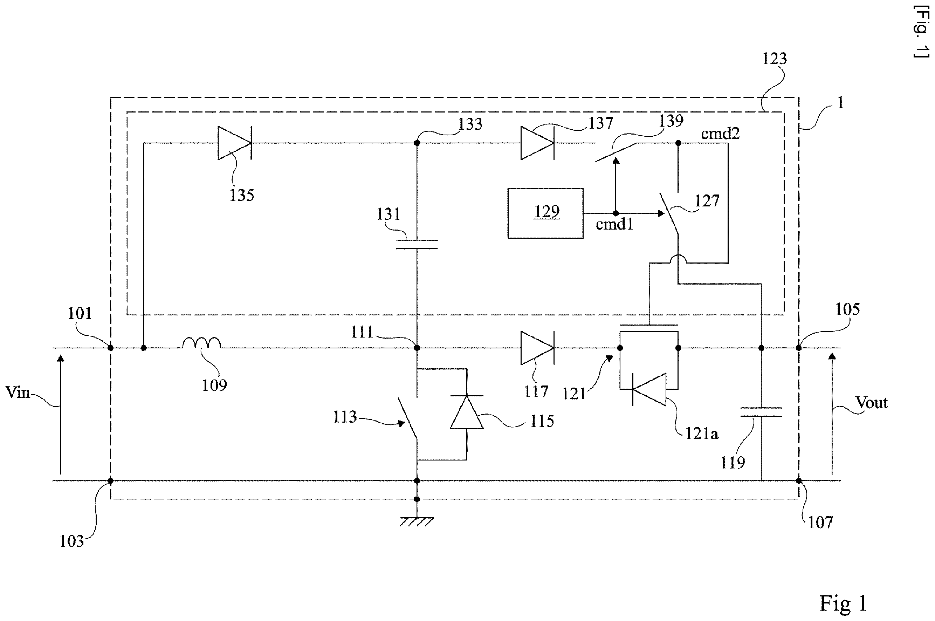

La figure 1 représente un circuit d'un mode de réalisation d'un convertisseur à découpage DC/DC, c'est-à-dire un convertisseur à découpage qui convertit une tension continue d'alimentation en une autre tension continue.

Le convertisseur 1 comprend deux bornes ou noeuds 101 et 103 destinés à recevoir une tension continue d'alimentation Vin, et deux bornes ou noeuds de sortie 105 et 107 destinés à fournir une tension continue de sortie Vout. La tension Vin est par exemple positive et référencée au noeud 103, typiquement la masse. La tension Vout est par exemple positive et référencée au noeud 107, le noeud 107 étant ici connecté au noeud 103.

Un élément inductif 109 couple le noeud 101 à un noeud interne 111 du convertisseur 1.

Les noeuds 111 et 103 sont reliés par un interrupteur de découpage 113 en parallèle d'une diode 115. Dans cet exemple, l'anode de la diode 115 est connectée au noeud 103. A titre d'exemple, l'association en parallèle de l'interrupteur 113 et de la diode 115 est mise en oeuvre par un transistor MOS, par exemple à canal N, la diode 115 correspondant alors à la diode intrinsèque (body diode) du transistor.

Un élément capacitif 119 couple les noeuds 105 et 107. Cet élément capacitif 119 est de préférence externe au convertisseur 1, mais peut également être partiellement ou totalement intégré dans le convertisseur 1 comme cela est représenté en figure 1.

Le noeud 111 est couplé au noeud 105 par une association en série d'une diode 117 et d'un transistor 121, dans cet exemple un transistor MOS à canal N. La diode intrinsèque 121a du transistor 121 et la diode 117 sont connectées en inverse l'une de l'autre. Dans cet exemple, la source du transistor 121 et l'anode de la diode 121a sont couplées, de préférence connectées, au noeud 105. La cathode de la diode 121a est alors couplée, de préférence connectée, à la cathode de la diode 117, l'anode de la diode 117 étant couplée, de préférence connectée, au noeud 111.

En variante, un interrupteur de découpage (non représenté), commandé en inverse de l'interrupteur 113, est connecté en parallèle de la diode 117. Dans cette variante, cet interrupteur et la diode 117 sont par exemple mis en oeuvre par un transistor MOS, par exemple à canal N, la diode 117 correspondant alors à la diode intrinsèque du transistor.

Le convertisseur 1 comprend un circuit 123 de commande du transistor 121. Le circuit 123 est configuré pour fournir un signal cmd2 à la borne de commande ou grille du transistor 121. Le circuit 123 comprend un interrupteur 127 couplant le noeud 105 à la grille du transistor 121. Le circuit 123 comprend un circuit 129 configuré pour fournir un signal de commande cmd1 à la borne de commande de l'interrupteur 127.

Lors de la connexion d'une source de tension d'alimentation Vin aux bornes 101 et 103, le circuit 123 est configuré pour maintenir l'interrupteur 127 fermé jusqu'à ce que la tension Vout soit sensiblement égale à la tension d'alimentation Vin, c'est-à-dire jusqu'à ce que le noeud 105 soit à un potentiel sensiblement égal au potentiel du noeud 101.

Dans le mode de réalisation représenté, le circuit 123 comprend également un interrupteur 139. La borne de commande de l'interrupteur 139 est connectée à la borne de commande de l'interrupteur 127, de manière à recevoir le signal cmd1. Une borne de conduction de l'interrupteur 139 est couplée, de préférence connectée, à la grille du transistor 121. L'autre borne de conduction de l'interrupteur 139 est couplée au noeud 101 par deux diodes 135 et 137 en série. Un élément capacitif 131 couple le noeud 111 au noeud 133 d'interconnexion des diodes 135 et 137. Dans cet exemple, les anodes des diodes 135 et 137 sont du côté des noeuds respectifs 101 et 133. Le circuit 123 est configuré pour fermer l'interrupteur 121 suite à une ouverture de l'interrupteur 113.

Initialement, lorsqu'aucune tension n'est appliquée entre les bornes 101 et 103, les interrupteurs 113, 127 et 139 sont ouverts, et le transistor 121 est bloqué.

Dans une première phase de fonctionnement, suivant la connexion d'une source de tension Vin, le convertisseur 1 n'est pas commandé en commutation (découpage). L'interrupteur 113 reste donc ouvert. La connexion de la source de tension entraîne que le circuit 129 ferme l'interrupteur 127, l'interrupteur 139 étant laissé ouvert. Ainsi, le potentiel du noeud 105 est appliqué sur la grille du transistor 121, d'où il résulte que la tension grille-source du transistor 121 est sensiblement nulle. Le transistor 121 reste donc bloqué. Du fait que le transistor 121 est bloqué et l'interrupteur 113 ouvert, en théorie, aucun courant ne circule du noeud 101 au noeud 105 en traversant l'élément inductif 109. Néanmoins, dans le mode de réalisation représenté, la tension Vout croît en raison des courants de fuite entre les noeuds 101 et 105. Dans un autre mode de réalisation, l'augmentation de la tension Vout résulte de la fermeture d'un interrupteur de démarrage optionnel connecté entre les noeuds 101 et 105. Quand la tension Vout devient sensiblement égale à Vin, l'interrupteur 127 est ouvert. La grille du transistor 121 reste alors chargée à un potentiel sensiblement égal au potentiel du noeud 105, et le transistor 121 reste bloqué.

Dans une deuxième phase de fonctionnement, le convertisseur 1 est commandé en commutation, par exemple en modulation de largeur d'impulsion. Lors d'un premier cycle de commutation, l'interrupteur 113 est fermé. Cette fermeture entraîne qu'une tension sensiblement égale à Vin est présente aux bornes de l'élément capacitif 131 (à la chute de tension dans la diode 135 près). L'interrupteur 113 est ensuite ouvert et le potentiel du noeud 111 augmente. Comme l'élément capacitif 131 ne peut se décharger, il opère un décalage de niveau entre les potentiels des noeuds 111 et 133, le potentiel du noeud 133 suivant l'augmentation du potentiel du noeud 111 avec un décalage de niveau de l'ordre de Vin. Dans le même temps, l'interrupteur 139 est fermé. La grille du transistor 121 est alors portée au potentiel du noeud 133. Ce potentiel est suffisant pour que le transistor 121 devienne passant. Le circuit 123 maintient ensuite l'interrupteur 139 passant jusqu'à l'extinction du convertisseur 1, ce qui permet de maintenir le transistor 121 passant. En effet, à chaque cycle de commutation, l'élément capacitif fournit une différence de potentiel entre, d'une part, le noeud 133 relié à la grille du transistor 121 par l'interrupteur 139 fermé, et, d'autre part, le noeud 105, cette différence de potentiel étant suffisante pour maintenir le transistor 121 passant. Tant que le transistor 121 est passant, on retrouve le fonctionnement usuel d'accumulation d'énergie dans l'élément inductif 109 quand l'interrupteur 113 est fermé, et de restitution de cette énergie à l'élément capacitif 119 quand l'interrupteur 113 est ouvert.

Un avantage du circuit décrit, en particulier du transistor 121, est qu'il évite qu'un courant d'appel ne circule, dès la connexion d'une source de tension Vin, entre les noeuds 101 et 105 en traversant l'élément inductif 109. Un tel courant d'appel risquerait de détériorer le convertisseur et/ou des composants connectés en sortie du convertisseur.

Le fait d'intégrer le transistor 121 et son circuit de commande dans le convertisseur 1 constitue une solution moins complexe et moins encombrante qu'avec des composants externes au convertisseur, en particulier des composants externes discrets.

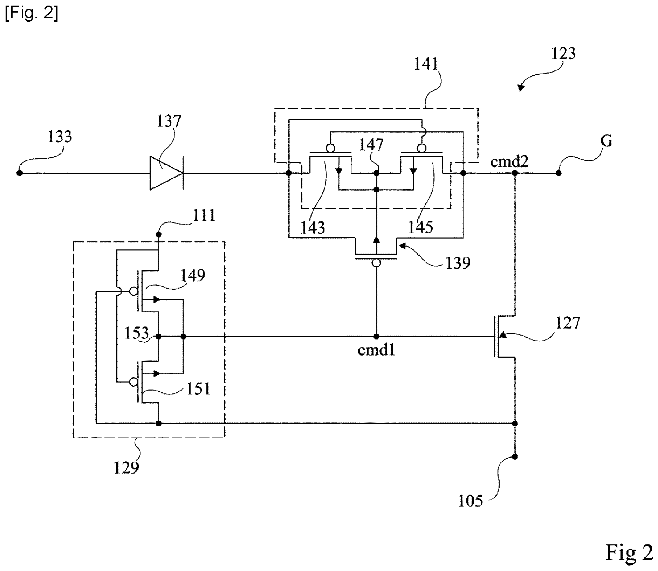

La figure 2 représente de manière plus détaillée un mode de réalisation d'une partie du convertisseur 1 de la figure 1, et plus particulièrement d'une partie du circuit de commande 123.

En figure 2, on a représenté le noeud 133, la diode 137, l'interrupteur 139, la borne de commande G du transistor 121, le noeud 105, l'interrupteur 127, le circuit 129 et le noeud 111.

Dans ce mode de réalisation, l'interrupteur 127 est un transistor MOS, ce transistor et le transistor 121 étant du même type de canal, dans cet exemple à canal N. La source du transistor 127 est couplée, de préférence connectée, au noeud 105. L'interrupteur 139 est également un transistor MOS, mais à canal du type opposé à celui du canal des transistors 121 et 127. Dans cet exemple, le transistor 139 est donc à canal P.

Le circuit de commande 123 comprend un circuit 141 de polarisation du substrat du transistor 139. Plus particulièrement, dans cet exemple, le circuit 141 est configuré pour porter le substrat du transistor 139 au potentiel le plus élevé entre les potentiels du noeud 133 et de la grille G. A titre d'exemple, le circuit 141 comprend deux transistors PMOS 143 et 145 en série couplant la cathode de la diode 137 à la grille G du transistor 121. La grille du transistor 143 est connectée à la grille G du transistor 121, la grille du transistor 145 étant connectée à la cathode de la diode 137. Le noeud 147 d'interconnexion des transistors 143 et 145 est connecté aux substrats des transistors 143, 145 et 139.

Le circuit 129 est ici configuré pour appliquer, aux grilles des transistors 127 et 139, le potentiel le plus élevé entre les potentiels des noeuds 105 et 111. A titre d'exemple, le circuit 129 comprend deux transistors PMOS 149 et 151 en série couplant les noeuds 111 et 105. La grille du transistor 149 est connectée au noeud 105, la grille du transistor 151 étant connectée au noeud 111. Le noeud 153 d'interconnexion des transistors 149 et 151 est connecté aux substrats des transistors 149 et 151, et aux grilles des transistors 139 et 127.

Dans une variante de réalisation non représentée, le circuit 129 est configuré pour appliquer, aux grilles des transistors 127 et 139, le potentiel le plus élevé entre les potentiels des noeuds 105 et 101. Dans l'exemple de la figure 2, cela revient à remplacer le noeud 111 par le noeud 101.

La figure 3 représente des chronogrammes illustrant un exemple de fonctionnement du convertisseur de la figure 1 mis en oeuvre de la façon décrite en relation avec la figure 2.

Des chronogrammes 301, 303, 305, 307, 309 et 311 illustrent l'évolution temporelle respectivement de la tension Vin, de la tension V1 du noeud 111, de la tension V2 du noeud 133, de la tension Vout, de la tension Vcmd1 de la grille du transistor 127 et de la tension Vcmd2 de la grille G du transistor 121. Lorsque l'on fait référence à la tension d'un noeud ou de la grille d'un transistor, on considère qu'il s'agit de la tension entre ce noeud ou cette grille et la masse (noeud 103). Autrement dit, lorsque l'on fait référence à la tension d'un noeud ou de la grille d'un transistor, il s'agit du potentiel de ce noeud ou de cette grille.

A un instant initial t0, aucune source de tension d'alimentation n'est connectée entre les bornes 101 et 103. Les tensions Vin, V1, V2, Vout, Vcmd1 et Vcmd2 sont donc nulles. De plus, l'interrupteur 113 est ouvert et les transistors 121, 127 et 139 sont bloqués.

A un instant suivant t1, marquant le début de la première phase de fonctionnement, une source de tension continue Vin, par exemple une batterie, est connectée entre les noeuds 101 et 103.

A partir de l'instant t1, en raison des capacités parasites du convertisseur 1, la tension Vin croît pour atteindre une valeur stable Vbat à un instant t2. Le transistor 121 est bloqué, ce qui entraîne que la tension Vout reste sensiblement nulle. De plus, l'interrupteur 113 étant ouvert et le transistor 121 étant bloqué, les tensions V1 et V2 sont sensiblement égales à la tension Vin et augmentent avec la tension Vin. La tension Vcmd1, qui correspond au maximum des tensions Vout et V1, est alors sensiblement égale à la tension V1, donc à la tension Vin, et augmente avec la tension Vin. Cette augmentation de la tension Vcmd1 par rapport à la tension Vout entraîne que la tension grille-source du transistor 127 devient suffisante pour que le transistor soit passant. En outre, du fait que les tensions Vcmd1 et V2 sont sensiblement égales à la tension Vin et augmentent avec la tension Vin, la tension grille-source du transistor 139 reste nulle ou presque. Il en résulte que le transistor 139 reste bloqué. Du fait que les transistors 127 et 139 sont respectivement passant et bloqué, la tension Vcmd2 est sensiblement égale à la tension Vout. Ainsi, la tension grille-source du transistor 121 est nulle ou presque et le transistor 121 reste bien bloqué jusqu'à l'instant t2.

A l'instant t2, la tension Vin est égale à Vbat, les tensions V1, V2 et Vcmd1 sont sensiblement égales à Vin, et les tensions Vout et Vcmd2 sont nulles ou presque.

A partir d'un instant suivant t3, l'élément capacitif 119 se charge progressivement, soit en raison des courants de fuite entre les noeuds 101 et 105, soit en fermant un interrupteur de démarrage optionnel connecté entre ces noeuds. La tension Vout augmente donc jusqu'à être sensiblement égale, à un instant t4, à la tension Vin, c'est-à-dire à Vbat.

Entre les instants t3 et t4, pendant que la tension Vout croît, les tensions V1 et V2 sont sensiblement égales à la tension Vin. La tension Vcmd1, qui correspond au maximum des tensions Vout et V1, est alors sensiblement égale à la tension V1, donc à la tension Vin. Du fait que les tensions Vcmd1 et V2 sont toutes les deux sensiblement égales à Vin, la tension grille-source du transistor 139 est nulle ou presque et le transistor 139 reste bloqué. En outre, tant que la tension Vout n'est pas sensiblement égale à la tension Vin, la différence entre les tensions Vcmd1 et Vout est telle que la tension grille-source du transistor 127 est suffisante pour le maintenir passant, la tension Vcmd2 suivant alors la tension Vout. Il en résulte que la tension grille-source du transistor 121 est nulle ou presque et que le transistor 121 reste bloqué. En revanche, quand la tension Vout devient sensiblement égale à la tension Vin, les tensions Vcmd1 et Vout deviennent sensiblement égales. La tension grille-source du transistor 127 devient alors nulle ou presque et le transistor 127 se bloque. Une fois que le transistor 127 se bloque, la grille G du transistor 121 est flottante et la tension Vcmd2 reste sensiblement égale à la tension Vout au moment de la fermeture de l'interrupteur 127, c'est-à-dire à Vbat. Il en résulte que la tension grille-source du transistor 121 est nulle ou presque et que le transistor 121 reste bloqué.

Ainsi, à l'instant t4, la tension Vin est égale à Vbat, les tensions V1, V2, Vout, Vcmd1 et Vcmd2 sont toutes sensiblement égales à Vbat, l'interrupteur 113 est ouvert, et les transistors 121, 127 et 139 sont tous bloqués.

A un instant suivant t5, marquant la fin de la première phase de fonctionnement et le début de la deuxième phase de fonctionnement, l'interrupteur 113 est fermé jusqu'à un instant t6.

Entre les instants t5 et t6, la tension V1 est nulle ou presque et la tension V2 est sensiblement égale à la tension Vin, c'est-à-dire à Vbat. Les valeurs des autres tensions Vin, Vout, Vcmd1 restent sensiblement les mêmes qu'à l'instant t4. Les transistors 127 et 139 restent donc bloqués. Il en résulte que la tension Vcmd2 reste sensiblement égale à Vbat, donc à la tension Vout, et le transistor 121 reste bloqué.

A l'instant t6, l'interrupteur 113 est ouvert et la tension V1 du noeud 111 augmente. Du fait que l'élément capacitif 131 opère un décalage de niveau entre les potentiels des noeuds 111 et 133, la tension V2 du noeud 133 augmente également, avec un décalage de l'ordre de Vbat par rapport à la tension V1. Ainsi, alors que la tension V1 est encore inférieure à Vbat, la tension V2 est déjà supérieure à Vbat et la tension Vcmd1 est toujours égale à Vbat (tension Vout). La tension grille-source du transistor 139 est alors suffisante pour que le transistor 139 soit passant et que le potentiel du noeud 133 soit porté sur la grille G du transistor. La capacité de la grille G du transistor 121 se charge et la tension Vcmd2 augmente. L'augmentation de la tension Vcmd2 par rapport à la tension Vout entraîne que la tension grille-source du transistor 121 devient suffisante pour que le transistor 121 soit passant. Une fois le transistor 121 passant, un courant peut circuler du noeud 111 jusqu'au noeud 105, et de l'énergie accumulée dans l'élément inductif 109 est restituée à l'élément capacitif 119. En outre, une fois que le transistor 121 est passant, les tensions V1 et Vout s'équilibrent.

On notera que, dans certains cas, après l'instant t6, la tension V1 peut présenter un pic de tension atteignant des valeurs supérieures à Vbat, notamment du fait que le temps pris pour que la tension V1 augmente au-delà de Vbat peut être court devant le temps nécessaire pour que le transistor 139 puis le transistor 121 deviennent passants. Dans ces cas, la tension Vcmd1 devient alors sensiblement égale à la tension V1, et suit l'augmentation de la tension V1. Toutefois, comme la tension V2 est décalée de Vbat par rapport à la tension V1, la tension grille-source du transistor 139 reste quand même suffisante pour que le transistor 139 devienne passant, ce qui entraîne que le transistor 121 devient passant et que la tension V1 décroît pour devenir sensiblement égale à la tension Vout.

Un avantage d'appliquer aux grilles des transistors 127 et 139 le potentiel le plus élevé entre les potentiels des noeuds 111 et 105 est d'assurer que la tension grille-source du transistor 139 reste toujours inférieure ou égale à Vbat.

Bien que cela ne soit pas illustré en figure 3, le convertisseur 1 est de type élévateur. Ainsi, après plusieurs cycles de commutation de l'interrupteur 113, l'interrupteur 113 est commandé de manière à obtenir, en régime permanent, une tension Vout d'une valeur choisie supérieure à Vbat.

Dans le convertisseur 1 mis en oeuvre selon le mode de réalisation de la figure 2, les tensions grille-source, grille-drain et drain-source maximales, en valeur absolue, des transistors 121, 127 et 139 sont de l'ordre de Vbat, donc inférieures à la tension Vout maximale que peut délivrer le convertisseur 1.

Dans une variante de réalisation (non illustrée), le circuit de commande 123 ne comprend pas l'interrupteur 139. Dans ce cas, le circuit 123 peut ne comprendre que l'interrupteur 127 et le circuit 129. La commande pour maintenir le transistor 121 passant, une fois que la tension Vout est sensiblement égale à la tension Vin, peut alors être mise en oeuvre à l'aide d'un autre circuit de commande, par exemple un circuit comprenant une pompe de charge et étant configuré pour maintenir la capacité de grille du transistor 121 suffisamment chargée pour que le transistor 121 reste passant, la pompe de charge étant par exemple couplée au noeud 105.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art. En particulier, l'homme du métier est en mesure de prévoir un transistor 121 et un circuit de commande 123 dans d'autres types de convertisseurs qu'un convertisseur élévateur, en adaptant le circuit de commande 123. Par exemple, un transistor 121 et un circuit de commande du type du circuit 123 peuvent être prévus dans un convertisseur à découpage de type buck-boost (abaisseur-élévateur), ou dans un convertisseur à découpage du type à correction de facteur de puissance (PFC - Power Factor Correction).

En outre, l'interrupteur 113 et, le cas échéant, un interrupteur en parallèle de la diode 117, peuvent être commandés autrement qu'en modulation de largueur d'impulsion, par exemple en modulation de fréquence.

Enfin, la mise en oeuvre pratique des modes de réalisation et variantes décrits est à la portée de l'homme du métier à partir des indications fonctionnelles données ci-dessus.

## Revendications

1. Dispositif comprenant :
un élément inductif (109) couplant un premier noeud (101) à un deuxième noeud (111), le premier noeud (101) étant destiné à recevoir une tension continue d'alimentation (Vin) référencée par rapport à un quatrième noeud (103, 107) d'application d'un potentiel de référence ;
au moins un premier transistor MOS (121) couplant le deuxième noeud à un troisième noeud (105) ;
un deuxième élément capacitif (119) couplant le troisième noeud (105) et le quatrième noeud (103) ;
un premier circuit de commande (123) du premier transistor (121), le premier circuit comportant :
un premier interrupteur (127) couplant le troisième noeud (105) à la grille(G) du premier transistor ;
un élément capacitif (131) connecté entre le deuxième noeud (111) et un cinquième noeud (133) ; et
une association série d'une première diode (137) et d'un troisième interrupteur (139) connectée entre le cinquième noeud (133) et la grille (G) du premier transistor (121), l'anode de la première diode (137) étant du côté du cinquième noeud (133), la borne de commande du troisième interrupteur (139) étant connectée à la borne de commande du premier interrupteur (127), le troisième interrupteur (139) étant un troisième transistor à canal du type opposé à celui du canal du premier transistor (121) ;
une deuxième diode (117) en série avec le premier transistor (121) entre les deuxième (111) et troisième (105) noeuds, l'anode de la deuxième diode (117) étant couplée au deuxième noeud (111), la deuxième diode (117) et la diode intrinsèque (121a) du premier transistor (121) étant connectées en sens contraire l'une de l'autre ; et une troisième diode (135) connectée entre le premier noeud (101) et le cinquième noeud (133), l'anode de la troisième diode (135) étant du côté du premier noeud (101);,
le dispositif formant un convertisseur à découpage.

2. Dispositif selon la revendication 1, dans lequel un deuxième interrupteur (113) couple le deuxième noeud (111) au quatrième noeud (103, 107) d'application d'un potentiel de référence.

3. Dispositif selon la revendication 1 ou 2, dans lequel le premier interrupteur (127) est un deuxième transistor à canal du même type que celui du premier transistor (121).

4. Dispositif selon l'une quelconque des revendications 1 à 3, dans lequel le premier transistor (121) est à canal N.

5. Dispositif selon l'une quelconque des revendications 1 à 4, dans lequel le premier circuit (123) comprend un deuxième circuit (129) de commande du premier interrupteur (127) .

6. Circuit électronique comprenant un dispositif selon l'une quelconque des revendications 1 à 5.

7. Procédé de démarrage d'un dispositif selon l'une quelconque des revendications 1 à 5, comprenant les étapes suivantes :
connecter une source de tension continue (Vin) au premier noeud (101) ; et
mettre le premier transistor (121) à l'état bloqué en fermant le premier interrupteur (127).

8. Procédé selon la revendication 7, dans lequel le premier interrupteur (127) est maintenu fermé par le premier circuit de commande (123) jusqu'à ce que le troisième noeud (105) soit à un potentiel sensiblement égal au potentiel (Vbat) appliqué au premier noeud (101).

9. Procédé selon la revendication 7 ou 8, dans sa dépendance à la revendication 5, dans lequel le deuxième circuit (129) fournit, à la borne de commande (G) du premier interrupteur (127), le potentiel le plus élevé entre les potentiels du troisième noeud (105) et du premier noeud (101) ou le potentiel le plus élevé entre les potentiels du troisième noeud (105) et du deuxième noeud (111).

10. Procédé selon l'une quelconque des revendications 7 à 9, dans sa dépendance à la revendication 2, dans lequel le deuxième interrupteur (113) est commandé en modulation de largeur d'impulsion une fois que les potentiels des premier (101) et troisième (105) noeuds sont sensiblement égaux.

## Patentansprüche

1. Eine Vorrichtung, die Folgendes aufweist:
ein induktives Element (109), das einen ersten Knoten (101) mit einem zweiten Knoten (111) koppelt, wobei der erste Knoten (101) dazu bestimmt ist, eine Gleichstromversorgungsspannung (Vin) zu empfangen, die auf einen vierten Knoten (103, 107) zum Anlegen eines Referenzpotentials referenziert ist;
wenigstens einen ersten MOS-Transistor (121), der den zweiten Knoten mit einem dritten Knoten (105) koppelt;
ein zweites, kapazitives Element (119), das den dritten Knoten (105) und den vierten Knoten (103) koppelt;
eine erste Steuerschaltung (123) des ersten Transistors (121), wobei die erste Schaltung Folgendes aufweist:
einen ersten Schalter (127), der den dritten Knoten (105) mit dem Gate (G) des ersten Transistors koppelt;
ein kapazitives Element (131), das zwischen dem zweiten Knoten (111) und einem fünften Knoten (133) verbunden ist; und
eine Reihenschaltung einer ersten Diode (137) und eines dritten Schalters (139), die zwischen dem fünften Knoten (133) und dem Gate (G) des ersten Transistors (121) verbunden ist, wobei sich die Anode der ersten Diode (137) auf der Seite des fünften Knotens (133) befindet, wobei der Steueranschluss des dritten Schalters (139) mit dem Steueranschluss des ersten Schalters (127) verbunden ist, wobei der dritte Schalter (139) ein dritter Transistor mit einem Kanaltyp ist, der dem des Kanals des ersten Transistors (121) entgegengesetzt ist;
eine zweite Diode (117) in Reihe mit dem ersten Transistor (121) zwischen dem zweiten (111) und dem dritten (105) Knoten, wobei die Anode der zweiten Diode (117) mit dem zweiten Knoten (111) gekoppelt ist, wobei die zweite Diode (117) und die Body-Diode (121a) des ersten Transistors (121) in umgekehrter Richtung zueinander geschaltet sind; und
eine dritte Diode (135), die zwischen dem ersten Knoten (101) und dem fünften Knoten (133) verbunden ist, wobei sich die Anode der dritten Diode (135) auf der Seite des ersten Knotens (101) befindet,
wobei die Vorrichtung einen Schaltnetzteil-Wandler bildet.

2. Vorrichtung nach Anspruch 1, wobei ein zweiter Schalter (113) den zweiten Knoten (111) mit dem vierten Knoten (103, 107) zum Anlegen eines Referenzpotentials koppelt.

3. Vorrichtung nach Anspruch 1 oder 2, wobei der erste Schalter (127) ein zweiter Transistor mit einem Kanal desselben Typs wie der des ersten Transistors (121) ist.

4. Vorrichtung nach einem der Ansprüche 1 bis 3, wobei der erste Transistor (121) einen N-Kanal hat.

5. Vorrichtung nach einem der Ansprüche 1 bis 4, wobei die erste Schaltung (123) eine zweite Schaltung (129) zur Steuerung des ersten Schalters (127) aufweist.

6. Eine elektronische Schaltung mit der Vorrichtung nach einem der Ansprüche 1 bis 5.

7. Ein Verfahren zum Starten der Vorrichtung nach einem der Ansprüche 1 bis 5, aufweisend die Schritte:
Anschließen einer Gleichspannungsquelle (Vin) an den ersten Knoten (101); und
Versetzen des ersten Transistors (121) in den Aus-Zustand durch Einschalten des ersten Schalters (127).

8. Verfahren nach Anspruch 7, wobei der erste Schalter (127) durch die erste Steuerschaltung (123) eingeschaltet gehalten wird, bis der dritte Knoten (105) auf einem Potential liegt, das im Wesentlichen gleich dem an den ersten Knoten (101) angelegten Potential (Vbat) ist.

9. Verfahren nach Anspruch 7 oder 8 in seiner Abhängigkeit von Anspruch 5, wobei die zweite Schaltung (129) dem Steueranschluss (G) des ersten Schalters (127) das höchste Potenzial aus den Potenzialen des dritten Knotens (105) und des ersten Knotens (101) oder das höchste Potenzial aus den Potenzialen des dritten Knotens (105) und des zweiten Knotens (111) liefert.

10. Verfahren nach einem der Ansprüche 7 bis 9 in Abhängigkeit von Anspruch 2, bei dem der zweite Schalter (113) in Pulsweitenmodulation gesteuert wird, sobald die Potentiale des ersten (101) und des dritten (105) Knotens im Wesentlichen gleich sind.

## Claims

1. A device comprising:
an inductive element (109) coupling a first node (101) to a second node (111), the first node (101) being destined to receive a DC supply voltage (Vin) referenced to a fourth node (103, 107) of application of a reference potential;
at least one first MOS transistor (121) coupling the second node to a third node (105);
a second capacitive element (119) coupling the third node (105) and the fourth node (103);
a first control circuit (123) of the first transistor (121), the first circuit comprising:
a first switch (127) coupling the third node (105) to the gate (G) of the first transistor;
a capacitive element (131) connected between the second node (111) and a fifth node (133); and
a series association of a first diode (137) and of a third switch (139) connected between the fifth node (133) and the gate (G) of the first transistor (121), the anode of the first diode (137) being on the side of the fifth node (133), the control terminal of the third switch (139) being connected to the control terminal of the first switch (127), the third switch (139) is a third transistor having a channel type opposite to that of the channel of the first transistor (121);
a second diode (117) in series with the first transistor (121) between the second (111) and third (105) nodes, the anode of the second diode (117) being coupled to the second node (111), the second diode (117) and the body diode (121a) of the first transistor (121) being connected in reverse directions with respect to each other ; and
a third diode (135) connected between the first node (101) and the fifth node (133), the anode of the third diode (135) being on the side of the first node (101),
the device forming a switched-mode power converter.

2. The device of claim 1, wherein a second switch (113) couples the second node (111) to the fourth node (103, 107) of application of a reference potential.

3. The device of claim 1 or 2, wherein the first switch (127) is a second transistor having a channel of the same type as that of the first transistor (121).

4. The device of any of claims 1 to 3, wherein the first transistor (121) has an N channel.

5. The device of any of claims 1 to 4, wherein the first circuit (123) comprises a second circuit (129) for controlling the first switch (127).

6. An electronic circuit comprising the device of any of claims 1 to 5.

7. A method of starting the device of any of claims 1 to 5, comprising the steps of:
connecting a DC voltage source (Vin) to the first node (101); and
setting the first transistor (121) to the off state by turning on the first switch (127).

8. The method of claim 7, wherein the first switch (127) is maintained on by the first control circuit (123) until the third node (105) is at a potential substantially equal to the potential (Vbat) applied to the first node (101).

9. The method of claim 7 or 8, in its dependency on claim 5, wherein the second circuit (129) supplies, to the control terminal (G) of the first switch (127), the highest potential between the potentials of the third node (105) and of the first node (101) or the highest potential between the potentials of the third node (105) and of the second node (111).

10. The method of any of claims 7 to 9, in its dependency on claim 2, wherein the second switch (113) is controlled in pulse width modulation once the potentials of the first (101) and third (105) nodes are substantially equal.
